# EUROPEAN PATENT APPLICATION

(11) **EP 4 410 084 A1**
(43) Date of publication of application: **07.08.2024**
(21) Application number: 22872214.6
(22) Date of filing: 26.09.2022
(51) Int. Cl.: A01D 34/74

(54) **AUTONOMOUS OPERATION DEVICE**

(30) Priority: 27.09.2021 CN 202111134264; 27.09.2021 CN 202122345690 U
(71) Applicant: Zhejiang Sunseeker Industrial Co., Ltd., Jinhua, Zhejiang 321042 (CN)
(72) Inventor: RAN, Yuanzhong, Jinhua, Zhejiang 321042 (CN); ZHANG, Tao, Jinhua, Zhejiang 321042 (CN); XIONG, Jian, Jinhua, Zhejiang 321042 (CN)
(74) Representative: Manna, Sara
(86) International application number: PCT/CN2022/121353
(87) International publication number: WO 2023/046171

(57) **Abstract**

Disclosed in the present invention is an autonomous operation device. In the present invention, the autonomous operation device comprises: a device body; a cutting mechanism, wherein the cutting mechanism has a cutting body, which is located at the bottom of the device body; and a gear mounting mechanism, wherein the gear mounting mechanism is connected to the device body and the cutting mechanism, and is used for configuring a height between the cutting body and a traveling surface of the autonomous operation device when the cutting mechanism is mounted on the device body. Compared with the prior art, the autonomous operation device is convenient for a customer to use, and the production cost thereof can be reduced.

## Description

### Related applications cross-reference

This patent application claims the priority of the following two Chinese patent applications:
Filed Date: September 27, 2021; Application Number: 2021111342642; Title: Autonomous Work Equipment;
Filed Date: September 27, 2021; Application Number: 2021223456902; Title: Autonomous Work Equipment;
The full text of the above applications is incorporated into this document by reference.

### Field of the Invention

The disclosure relates to the field of outdoor operation devices, in particular to an autonomous operation device.

### Background

An example of an autonomous operation device is a lawn mower with a main function of trimming a lawn. Grass on lawns is maintained at different heights in different national regulations or lawn requirements. In order to cut grass of different heights, the height of a cutting mechanism is adjusted by a work adjustment mechanism of the lawn mower. However, the work adjustment mechanism requires a long time to adjust to reach the appropriate height. For example, some countries specify heights of lawns to be around 40mm-80mm, while others specify heights of lawns to be around 20mm-60mm. This requires adjusting excess heights. In order to reduce unnecessary adjustments and meet customer requirements, existing cutting machines require multiple molds to meet different requirements. In this case, production costs are high.

### Summary

The objective of the disclosure is to provide an autonomous operation device, which is customer-friendly and can reduce production costs.

To solve the above technical problems, an embodiment of the present invention provides an autonomous operation device, comprising: a body; a cutting mechanism having a cutting body, wherein the cutting body is located at a bottom of the body; and a gear mounting mechanism connected to the body and the cutting mechanism to configure a height between the cutting body and a traveling surface of the autonomous operation device when the cutting mechanism is mounted to the body.

In one embodiment of this disclosure, wherein the gear mounting mechanism comprises: a first seat connected to the cutting mechanism; and a connecting assembly extending along a length direction of the body, wherein two ends of the connecting assembly are associated with the first seat and the body separately, and a distance between at least one end of the connecting assembly and the traveling surface may be configured when the cutting mechanism is mounted.

In one embodiment of this disclosure, wherein the body has an accommodating cavity with an opening facing downwards, a plurality of limit portions are disposed on an inner wall of the accommodating cavity, and the plurality of limit portions are arranged along a height direction of the body; and the gear mounting mechanism further comprises: a second seat disposed opposite the first seat and connected to the connecting assembly, wherein the second seat is provided with docking portions fitting with some of the limit portions.

In one embodiment of this disclosure, wherein the limit portion is a shoulder, and the docking portion is a hook fitting with the shoulder.

In one embodiment of this disclosure, wherein a top of the second seat abuts against a top of the accommodating cavity.

In one embodiment of this disclosure, wherein the second seat of different models fit with different limit portions.

In one embodiment of this disclosure, wherein the gear mounting mechanism further comprises: a second seat disposed opposite the first seat and connected to the connecting assembly and the body, wherein the second seat has second mounting portions, the other end of the connecting assembly fits with some of the second mounting portions, and a distance between the connecting assembly and the traveling surface during mounting is configured through the second mounting portions.

In one embodiment of this disclosure, wherein there is a plurality of second mounting portions arranged along the height direction of the body.

In one embodiment of this disclosure, wherein the second mounting portion is a second mounting slot, and the connecting assembly is hinged with the second mounting slot through a second connecting shaft.

In one embodiment of this disclosure, wherein the second seat further has a second seat body, and the second mounting portion is detachably connected to the second seat body; the second seat body has a plurality of second mounting areas arranged along the height direction of the body, and the second mounting portion is mounted to any of the second mounting areas in an operable manner.

In one embodiment of this disclosure, wherein the first seat has a first mounting portion, and the distance between the connecting assembly and the traveling surface during mounting is configured through the first mounting portion.

In one embodiment of this disclosure, wherein there is a plurality of first mounting portions arranged along the height direction of the body.

In one embodiment of this disclosure, wherein the first mounting portion is a first mounting slot, and the connecting assembly is hinged with the first mounting slot through a first connecting shaft.

In one embodiment of this disclosure, wherein the first seat further has a first seat body, and the first mounting portion is detachably connected to the first seat body; the first seat body has a plurality of first mounting areas arranged along the height direction of the body, and the first mounting portion is mounted to any of the first mounting areas in an operable manner.

In one embodiment of this disclosure, wherein the connecting assembly comprises a plurality of groups of connecting rods arranged along the height direction of the body, and the connecting rods are hinged with the first seat and the second seat.

In one embodiment of this disclosure, wherein the gear mounting mechanism further comprises a work adjustment mechanism connected to the connecting assembly, and the work adjustment mechanism is used for adjusting a work height between the connecting assembly and the traveling surface during the use of the autonomous operation device, wherein when the cutting mechanism is mounted, the distance between at least one end of the connecting assembly and the traveling surface is configured as a work height threshold.

In one embodiment of this disclosure, wherein the connecting assembly has an annular adjustment portion, and a bearing surface extending along a circumferential direction and varying in height is configured on a circumferential surface of the annular adjustment portion; and the work adjustment mechanism comprises: an operation portion at least partially exposed outside the body; and an adjustment rod connected to the operation portion and fitting with the bearing surface.

In one embodiment of this disclosure, wherein the adjustment rod is detachably connected to the operation portion.

In one embodiment of this disclosure, wherein when the cutting mechanism is mounted to the body, and the length of the adjustment rod is different at different heights between the cutting body and the traveling surface.

An embodiment of the present invention also provides an autonomous operation device, comprising: a body; a cutting mechanism having a cutting body, wherein the cutting body is located at a bottom of the body, and the cutting mechanism has multiple mounting states when mounted to the body; and a gear mounting mechanism connected to the body and cutting mechanism, wherein the gear mounting mechanism is used for changing the mounting state of the cutting mechanism, and in the different mounting states, there are different work height thresholds between the cutting mechanism and a traveling surface of the autonomous operation device when the autonomous operation device is used.

Compared with the prior art, the gear mounting mechanism in the embodiments of the disclosure is disposed to change the height of the cutting mechanism when a cutting structure is mounted, that is, to configure the work height threshold of the cutting mechanism on the autonomous operation device, so as to reduce unnecessary distance adjustments for customers, to meet use requirements of customers, and to be more convenient to use. There is no need to develop a plurality of different grinding tools to manufacture a large number of different components according to different cutting heights, so that autonomous operation devices of different models may use a large number of identical components, thereby reducing production costs.

### Brief Description of the Drawings

One or more embodiments are exemplified by images in corresponding drawings. These exemplary descriptions do not constitute limitations on the embodiments. Elements with the same reference numerals in the drawings are represented as similar elements. Unless otherwise stated, the images in the drawings do not constitute limitations on proportions.
FIG. 1 is an exploded view of an autonomous operation device according to a first embodiment of the disclosure;
FIG. 2 is a schematic diagram of a body structure of the autonomous operation device according to the first embodiment of the disclosure;
FIG. 3 is a cross-sectional view of L-L in FIG. 2;
FIG. 4 is a top view of the autonomous operation device according to the first embodiment of the disclosure;
FIG. 5 is a cross-sectional view of A-A in FIG. 4;
FIG. 6 is a partially enlarged view of E in FIG. 5;
FIG. 7 is a schematic diagram of a second seat structural in FIG. 6;
FIG. 8 is a cross-sectional view of B-B in FIG. 4;
FIG. 9 is a partially enlarged view of F in FIG. 8;
FIG. 10 is a schematic diagram of a work adjustment mechanism structural in FIG. 9;
FIG. 11 is a top view of another autonomous operation device according to the first embodiment of the disclosure;
FIG. 12 is a cross-sectional view of C-C in FIG. 11;
FIG. 13 is a partially enlarged view of G in FIG. 12;
FIG. 14 is a schematic diagram of a second seat structural in FIG. 13;
FIG. 15 is a cross-sectional view of D-D in FIG. 11;
FIG. 16 is a partially enlarged view of H in FIG. 15;
FIG. 17 is a schematic diagram of a work adjustment mechanism structural in FIG. 16;
FIG. 18 is a schematic diagram of a mounting structure of a connecting assembly when a cutting mechanism is mounted at a high position according to a second embodiment of the disclosure;
FIG. 19 is a schematic diagram of a mounting structure of the connecting assembly when the cutting mechanism is mounted at a low position according to the second embodiment of the disclosure;
FIG. 20 is a schematic diagram of a mounting structure of a connecting assembly when a cutting mechanism is mounted at a high position according to a third embodiment of the disclosure; and
FIG. 21 is a schematic diagram of a mounting structure of the connecting assembly when the cutting mechanism is mounted at a low position according to the third embodiment of the disclosure.

### Detailed Description of the Embodiments

In order to make the purpose, technical solution and advantages of the embodiments of the present invention clearer, the various embodiments of the present invention will be described in detail in conjunction with the drawings below. However, those skilled in the art will understand that in the various embodiments of the present invention, many technical details have been provided to help readers better understand the present application. Nevertheless, even without these technical details and various changes and modifications based on the following embodiments, the technical solution required to be protected by the present application can still be achieved.

In the description below, certain specific details are elucidated for the purpose of explaining various public implementation examples to provide a thorough understanding of various public implementation examples. However, those skilled in the art will recognize that implementations may be practiced without one or more of these specific details. In other instances, well-known devices, structures, and techniques associated with the present application may not be shown or described in detail to avoid unnecessarily obscuring the description of the implementations.

Unless the context requires otherwise, in the entire specification and claims, the terms "including" and its variants, such as "includes" and "having," should be understood in an open, inclusive sense, i.e. should be interpreted as "including, but not limited to".

The various embodiments of the present invention will be described in detail with reference to the accompanying drawings in order to provide a clearer understanding of the purpose, features, and advantages of the present invention. It should be understood that the embodiments shown in the drawings are not intended to limit the scope of the present invention, but only to illustrate the essence of the technical solution of the present invention.

Throughout the specification, the mention of "an embodiment" or "one embodiment" indicates that specific features, structures, or characteristics described in the embodiment are included in at least one embodiment. Therefore, the appearance of "in one embodiment" or "in an embodiment" at various locations in the specification does not necessarily all refer to the same embodiment. Additionally, specific features, structures, or characteristics may be combined in any way in one or more embodiments.

The singular form 'a' and 'the' used in this specification and the appended claims include plural referents unless clearly specified otherwise. It should be noted that the term 'or' is generally used with its inclusive meaning of 'and/or' unless clearly specified otherwise.

In the following description, in order to clearly demonstrate the structure and operation of the present invention, many directional words will be used for description. However, terms such as "front", "back", "left", "right", "outer", "inner", "outward", "inward", "up", "down" should be understood as convenient terms, rather than limiting words.

Hereinafter, embodiments of the present invention will be described with reference to the accompanying drawings.

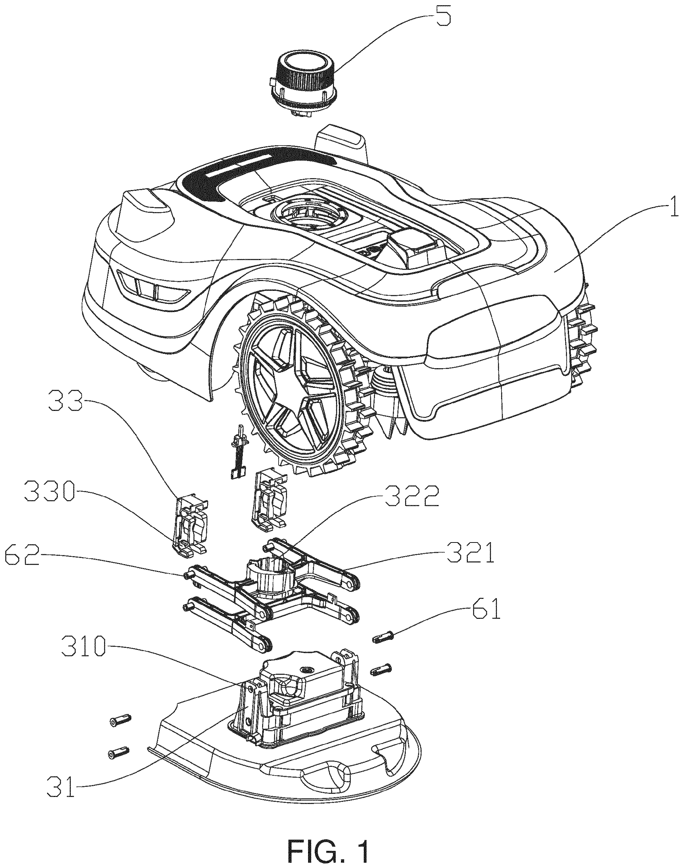

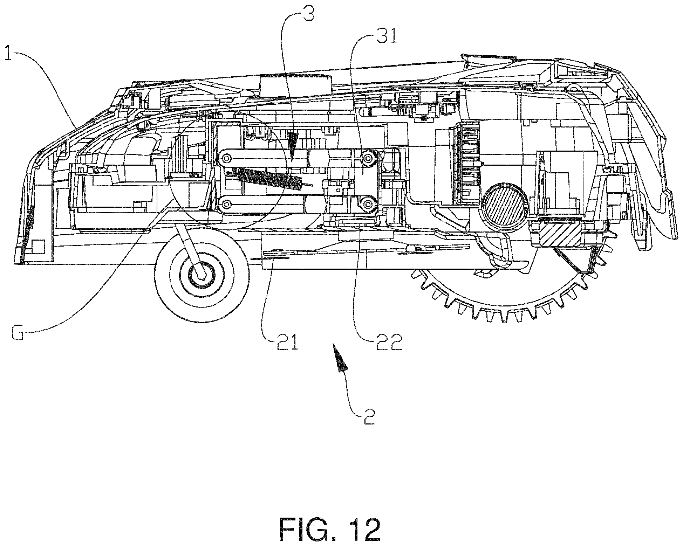

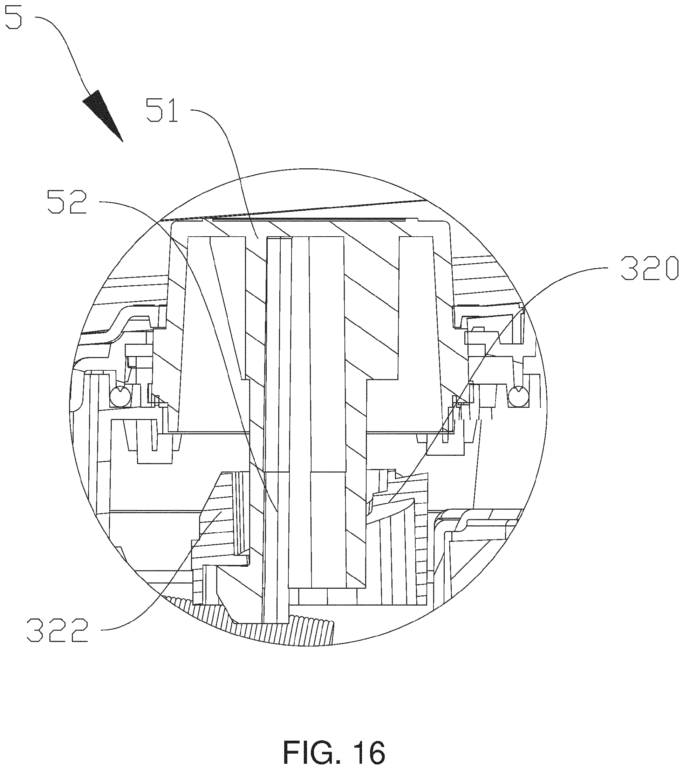

A first embodiment of the disclosure relates to an autonomous operation device. As shown in Figs. 1 to 17, the autonomous operation device includes: a body 1, a cutting mechanism 2, and a gear mounting mechanism 3. The body 1 has an accommodating cavity 4 with an opening facing downwards. The cutting mechanism 2 has a cutting body 21, and the cutting body 21 is located at a bottom of the body 1. The gear mounting mechanism 3 is connected to the cutting mechanism 2 to configure a height between the cutting body 21 and a traveling surface of the autonomous operation device when the cutting mechanism 2 is mounted to the body 1. When the cutting mechanism 2 is mounted to the body 1, the height of the cutting mechanism 2 is changed through the gear mounting mechanism 3, so that the height range of the cutting mechanism 2 has been quantified when the autonomous operation device works, and different heights of the autonomous operation device match lawns of different national regulations or height requirements.

Specifically, the cutting mechanism 2 has multiple mounting states when mounted to the body 1, and the gear mounting mechanism 3 is used for changing the mounting state of the cutting mechanism 2. In the different mounting states, there are different work height thresholds between the cutting mechanism 2 and the traveling surface of the autonomous operation device when the autonomous operation device is used. The work height threshold refers to a minimum or maximum height that the autonomous operation device can use to cut grass with the cutting mechanism in a working process.

From the foregoing content, it can be seen that the gear mounting mechanism 3 is disposed to change the height of the cutting mechanism 2 when a cutting structure is mounted, so as to reduce unnecessary distance adjustments for customers, to meet use requirements of customers, and to be more convenient to use. There is no need to develop a plurality of different grinding tools to manufacture a large number of different components according to different cutting heights, so that autonomous operation devices used in different countries or on different lawns may use a large number of identical components, thereby reducing production costs.

Implementation details of this embodiment will be specifically explained below. The following are merely implementation details provided for easy understanding, but are not necessary for implementing this embodiment.

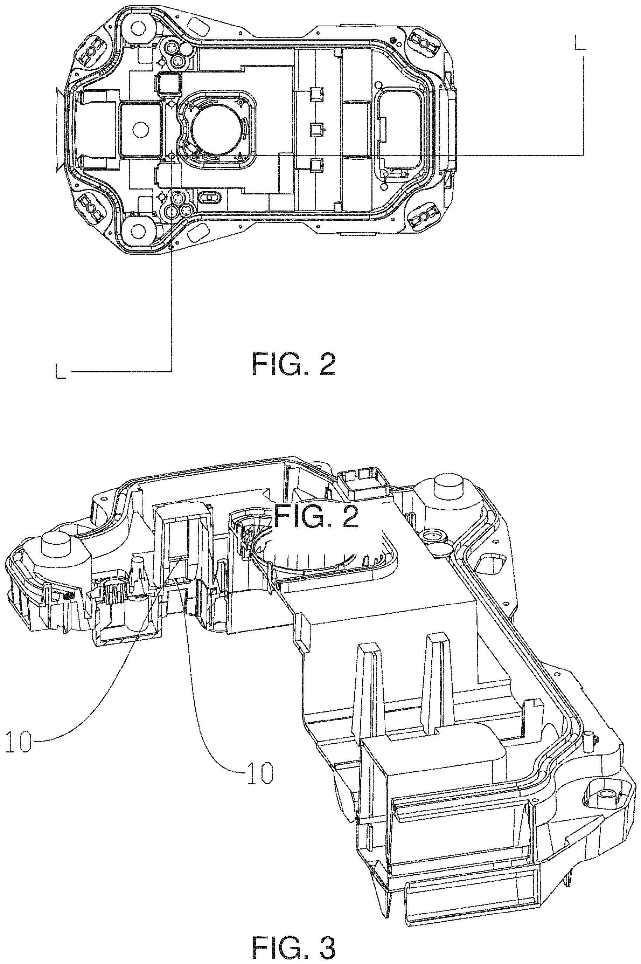

Further, as shown in FIGs. 2, 3, 4, 5, 6, 11, 12, and 13, the gear mounting mechanism 3 includes: a first seat 31 and a connecting assembly 32. The first seat 31 is connected to the cutting mechanism 2, the connecting assembly 32 extends along a length direction of the body 1, and two ends of the connecting assembly 32 are associated with the first seat 31 and the body 1 separately. A distance between at least one end of the connecting assembly 32 and the traveling surface may be configured when the cutting mechanism 2 is mounted, that is, the work height threshold of the cutting mechanism 2 is configured. The cutting mechanism 2 has a mounting frame 22 connected to the first seat 31 and the cutting body 21 mounted on the mounting frame 22, and a motor is disposed in the first seat 31 to drive the cutting body 21 to operate.

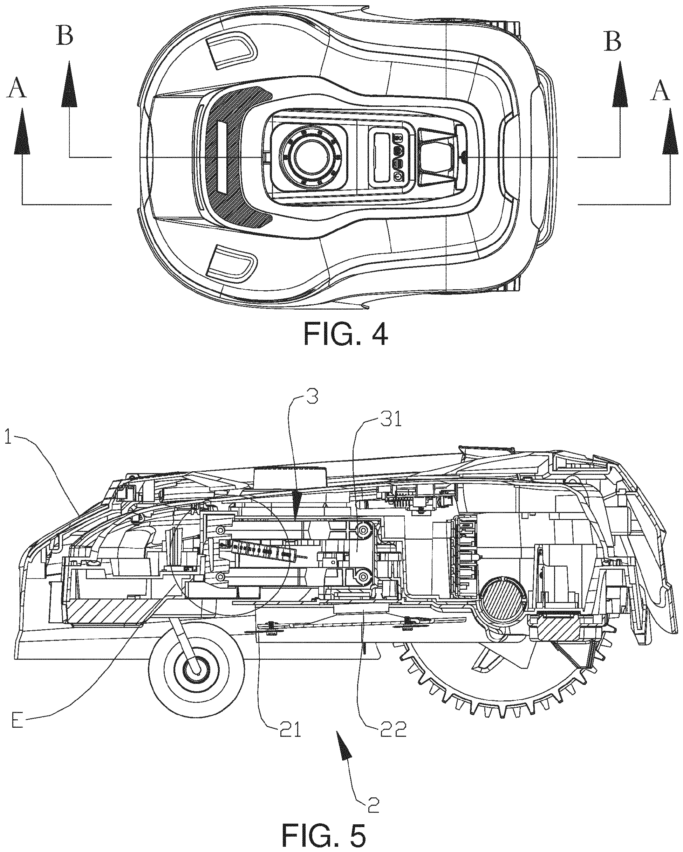

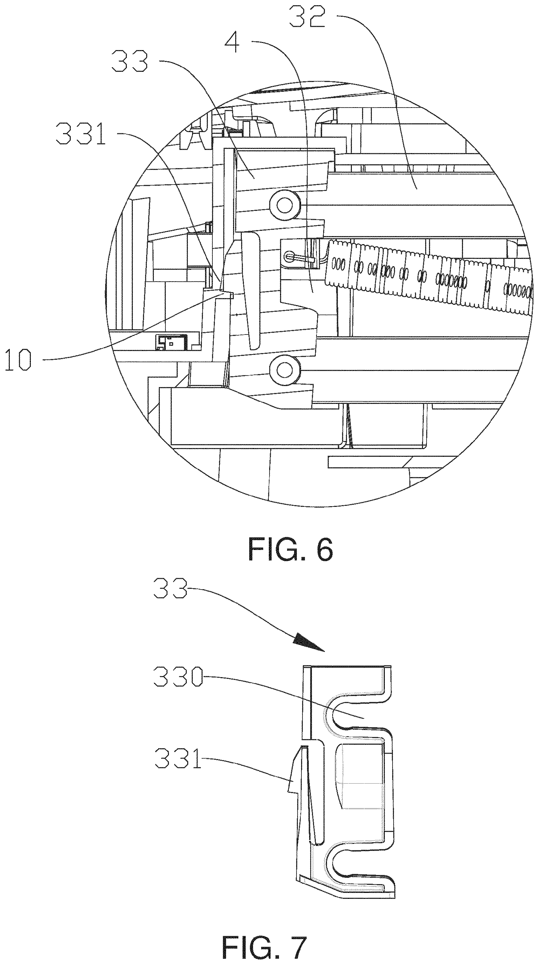

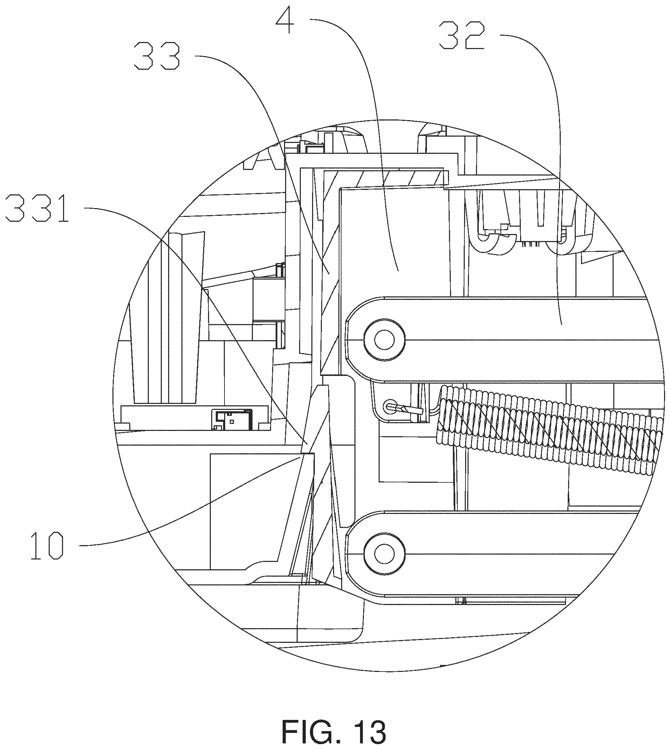

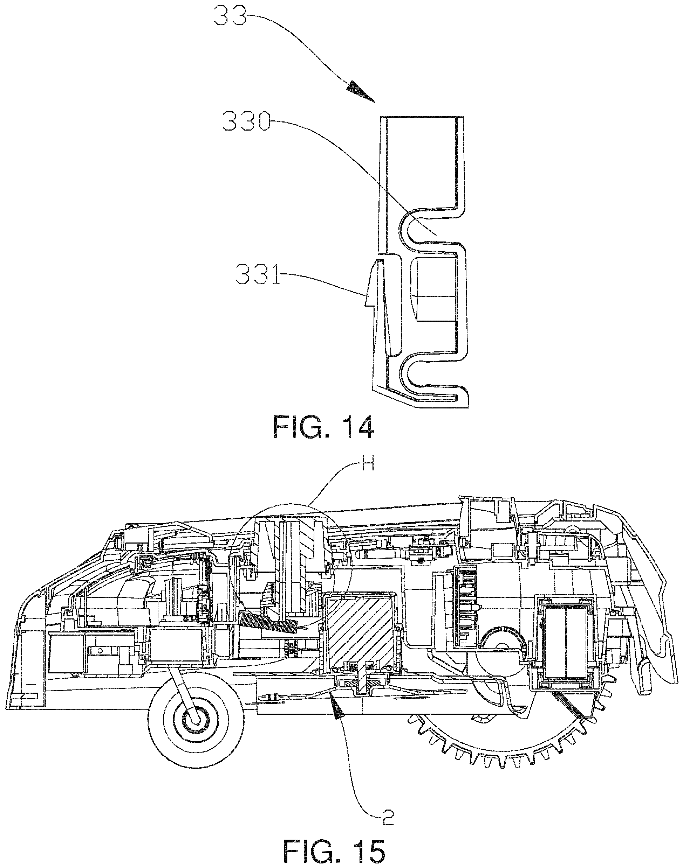

In addition, as shown in FIGs. 2 and 3, a plurality of limit portions 10 are disposed on an inner wall of the accommodating cavity 4, and the plurality of limit portions 10 are arranged along a height direction of the body 1. As shown in FIGs. 5, 6, 7, 12, 13, and 14, the gear mounting mechanism 3 further includes a second seat 33, the second seat 33 is disposed opposite the first seat 31 and is connected to the connecting assembly 32, and the second seat 33 is provided with docking portions 331 fitting with some of the limit portions 10. FIGs. 6 and 7 show upper and lower limit portions 10 and one docking portion 331. When the height of the cutting mechanism 2 is required to be raised, the docking portion 331 of the second seat 33 is docked with the upper limit portion 10 to form a mounting state of the cutting mechanism. When the height of the cutting mechanism 2 is required to be lowered as shown in FIGs. 13 and 14, the second seat 33 of another model is used, and the docking portion 331 of the second seat 33 is docked with the lower limit portion 10 to form another mounting state of the cutting mechanism. Understandably, in other embodiments, there may be more than two such as three or four limit portions 10, and there may be more than one docking portion 331, which is changed according to a quantity of the limit portions 10; and a quantity of mounting states of the cutting mechanism is also changed with the quantity of the limit portions 10.

Optionally, as shown in FIGs. 6, 7, 13, and 14, the limit portion 10 is a shoulder, and the docking portion 331 is a hook fitting with the shoulder. Understandably, in other embodiments, the limit portion 10 is a groove, and the docking portion 331 is a protruding member; alternatively, the docking portion 331 on the second seat 33 is a shoulder, and the limit portion 10 is a hook, which can achieve the connection between the second seat 33 and the body 1.

It is worth mentioning that, as shown in FIGs. 6 and 13, a top of the second seat 33 abuts against a top of the accommodating cavity 4. In this case, the docking portion 331 fits with the top of the accommodating cavity 4 to limit the second seat 33, so that the second seat 33 is positioned.

Further, as shown in FIGs. 6, 7, 13, and 14, the second seat 33 of different models fit with different limit portions 10. In this embodiment, there are two shoulders and one hook. When the height of the cutting mechanism 2 is required to be raised, the small second seat 33 is selected with the second seat 33 docking with the upper shoulder, and the height of the connection of the connecting assembly 32 to the second seat 33 is raised so that the height of the cutting mechanism 2 is also raised. When the height of the cutting mechanism 2 is required to be lowered, the large second seat 33 is selected with the second seat 33 docking with the lower shoulder, and the height of the connection of the connecting assembly 32 to the second seat 33 is lowered so that the height of the cutting mechanism 2 is also lowered. The large second seat 33 is docked with the lower shoulder in FIGs. 13 and 14, while the small second seat 33 is docked with the upper shoulder in FIGs. 6 and 7, so that the second seat 33 is disposed in the accommodating cavity 4 more stably. In this case, the model of the second seat 33 may be changed in different autonomous operation devices and then fits with the limit portions 10 at different heights of the body 1 to stably fix the second seat 33 into the same body 1, so that the mounting height of the cutting mechanism 2 is changed. Further, different autonomous operation devices can be produced by replacing only the second seat 33, and costs are reduced.

Further, the connecting assembly 32 includes a plurality of groups of connecting rods 321 arranged along the height direction of the body 1, and the connecting rods 321 are hinged with the first seat 31 and the second seat 33. Specifically, the first seat 31 is provided with a first mounting slot, and a first connecting shaft 61 passes through the first mounting slot and is connected to the connecting rod 321. The second seat 33 is provided with a second mounting slot, and a second connecting shaft 62 passes through the second mounting slot and is connected to the connecting rod 321.

In order to reduce costs, the height of the second seat 33 may be changed only by the the second seat 33 of a different model . Specifically, as shown in FIGs. 6, 7, 13, and 14, the position where the connecting rod 321 is connected to the second seat 33 of the different model remains unchanged. That is, in the second seat 33 of the different model, the distance from the joint between the connecting rod 321 and the second seat 33 to a bottom of the second seat 33 remains unchanged, while the distance from the joint between the connecting rod 321 and the second seat 33 to the top of the second seat 33 changes. Accordingly, the second seat 33 of the different model, namely, different height, is mounted on the body 1, and the height of the connecting assembly 32 is changed, so that the height of the cutting mechanism 2 is also changed.

In addition, as shown in FIGs. 4, 8, 9, 10, 11, 15, 16, and 17, when the cutting mechanism 2 is mounted, the distance between the at least one end of the connecting assembly 32 and the traveling surface is configured as a work height threshold. The gear mounting mechanism 3 further includes a work adjustment mechanism 5 connected to the connecting assembly 32, and the work adjustment mechanism 5 is used for adjusting a work height between the connecting assembly 32 and the traveling surface during the use of the autonomous operation device. When a complete autonomous operation device is assembled, the work height threshold of each autonomous operation device has been fixed. A user can adjust the work height of the cutting mechanism 2 through the work adjustment mechanism 5 according to use requirements between maximum and minimum work heights to meet the use requirements.

Understandably, in different embodiments, the autonomous operation device may not have the work adjustment mechanism 5, and the position at which the cutting mechanism 2 is mounted is the only work height of the autonomous operation device.

Further, as shown in FIGs. 1, 9, and 16, the connecting assembly 32 has an annular adjustment portion 322, and a bearing surface 320 extending along a circumferential direction and varying in height is configured on a circumferential surface of the annular adjustment portion 322. The work adjustment mechanism 5 includes an operation portion 51 and an adjustment rod 52. The operation portion 51 is at least partially exposed outside the body 1, and the adjustment rod 52 is connected to the operation portion 51 and inserted into the accommodating cavity 4 to fit with the bearing surface 320. The operation portion 51 may be a component such as a knob or a shifter lever. The operation portion 51 is rotated to drive the adjustment rod 52 to rotate, and the adjustment rod 52 is rotated to different areas of the bearing surface 320. Because the bearing surface 320 varies in height, when the adjustment rod 52 is rotated to a higher area of the bearing surface 320, due to weights of the connecting assembly 32, the first seat 31, the second seat 33, and the cutting mechanism 2, the connecting assembly 32 is lowered to a height as the bottom of the adjustment rod 52 continues abutting against the bearing surface 320 , so that the height of the cutting mechanism 2 is lowered; and when the adjustment rod 52 is rotated towards a lower area of the bearing surface 320, the adjustment rod 52 pulls the connecting assembly 32 to raise, so that the height of the cutting mechanism 2 is raised.

Specifically, in this embodiment, as shown in FIGs. 1, 5, 8, 12, and 15, the connecting rods 321 are arranged in upper and lower rows, and the annular adjustment portions 322 are circular holes formed in the upper row of connecting rods 321, that is, the adjustment rods 52 are connected to the upper row of connecting rods 321.

Further, the adjustment rod 52 is detachably connected to the operation portion 51.

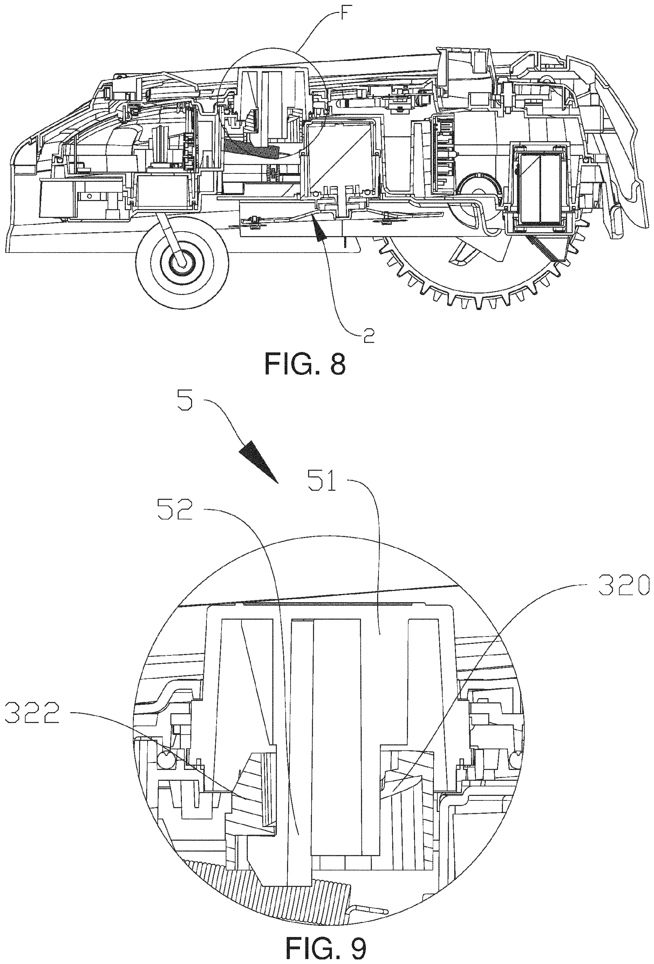

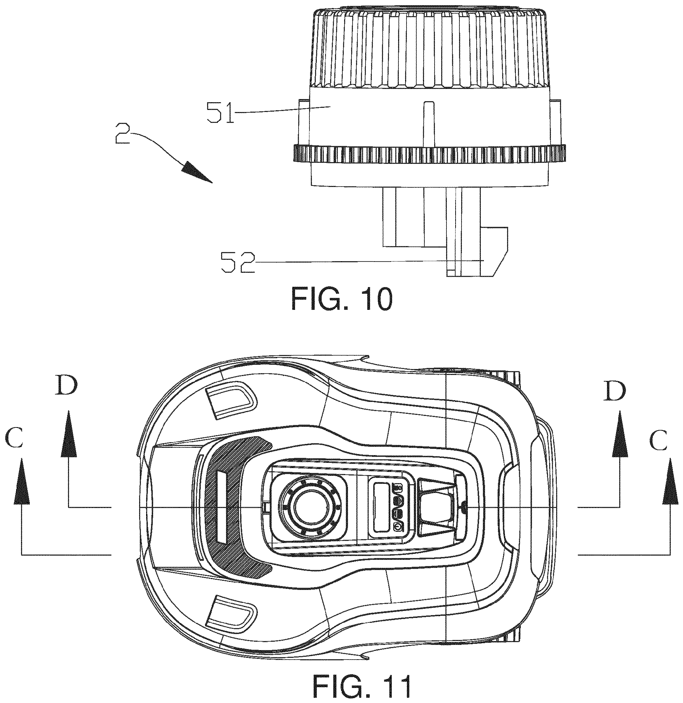

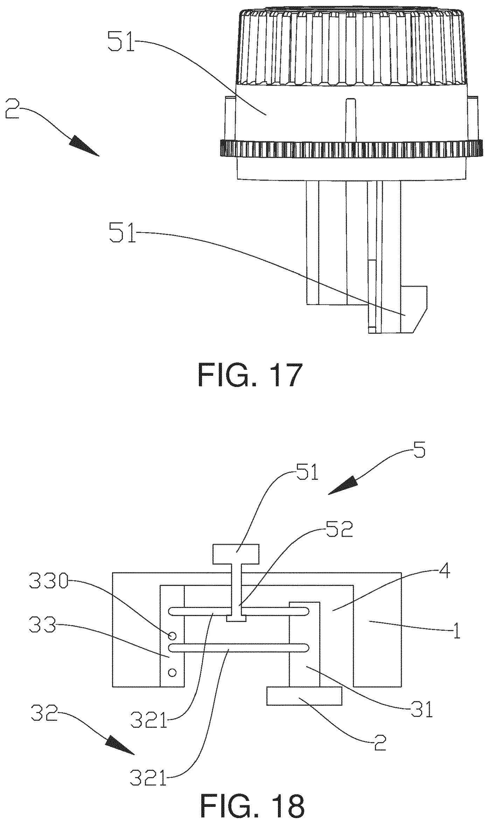

Further, as shown in FIGs. 8, 9, 10, 15, 16, and 17, when the cutting mechanism 2 is mounted to the body 1, the length of the adjustment rod 52 is different at different heights between the cutting body 21 and the traveling surface. That is, in the autonomous operation device of the low cutting mechanism 2, when the height of the connecting assembly 32 is lowered, the longer adjustment rod 52 as shown in FIG. 17 may be selected and connected to the connecting assembly 32 and the operation portion 51; and when the connecting assembly 32 is relatively high, the shorter adjustment rod 52 as shown in FIG. 10 may be selected and connected to the connecting assembly 32 and the operation portion 51.

In this embodiment, the height of the cutting mechanism 2 of the autonomous operation device is adjusted through the work adjustment mechanism 5 in work demands, which may be referred to the application public document with the application No. CN202010143005.5 and entitled WORKING MECHANISM AND OPERATION DEVICE. Details are not repeated here.

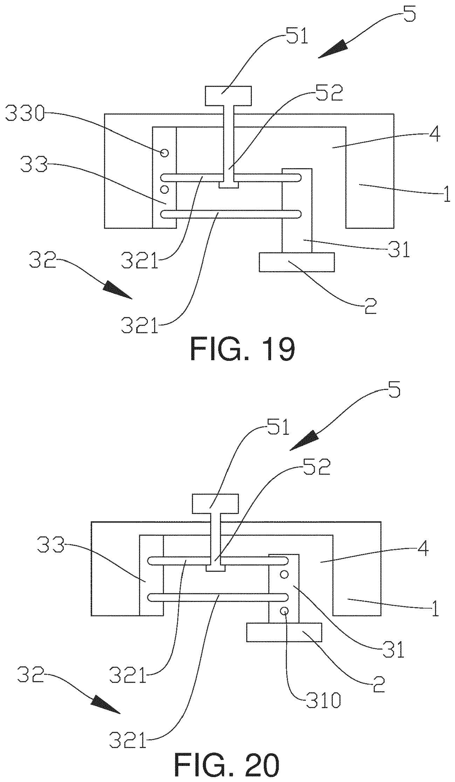

A second embodiment of the disclosure relates to an autonomous operation device. The second embodiment is roughly the same as the first embodiment, with the main difference being as follows: In the first embodiment, the second seat 33 of different models fit with the limit portions 10 at different heights on the body 1 to form different autonomous operation devices, thereby changing the height of the cutting mechanism 2 during mounting and enabling different autonomous operation devices to have different work height thresholds. In the second embodiment of the disclosure, as shown in FIGs. 18 and 19, the models of the second seat 33 remain unchanged, and the mounting positions of the second seat 33 on the body 1 remain unchanged. The gear mounting mechanism 3 further includes a second seat 33, which is disposed opposite the first seat 31 and is connected to the connecting assembly 32 and the body 1. The second seat 33 has second mounting portions 330, the other end of the connecting assembly 32 fits with some of the second mounting portions 330, and the connecting assembly 32 adjusts the distance between the connecting assembly 32 and the traveling surface during mounting through the second mounting portions 330.

Further, the second seat 33 has a plurality of second mounting portions 330 arranged along the height direction of the body 1, and the other end of the connecting assembly 32 fits with some of the second mounting portions 330.

Further, the second mounting portion 330 is a second mounting slot, and the connecting assembly 32 is hinged with the second mounting slot through a second connecting shaft 62. Understandably, in other embodiments, the second seat 33 further has a second seat body, and the second mounting portion 330 is detachably connected to the second seat body. The second seat body has a plurality of second mounting areas arranged along the height direction of the body 1, and the second mounting portion 330 is mounted to any of the second mounting areas in an operable manner. Specifically, the second mounting areas may be slots with different heights. The second mounting portion 330 may be a block structure embedded into the slot. When the height of the second connecting shaft 62 is required to be adjusted, the second mounting portion 330 is embedded into the second mounting area of the corresponding height. In addition, the second mounting area may alternatively be provided with a hook to hook the second mounting portion 330 and position the second mounting portion 330.

Specifically, the connecting assembly 32 has two groups of connecting rods 321 arranged up and down, and the second seat 33 has four rows of the second mounting slots arranged up and down. When the cutting mechanism 2 is required to be high, as shown in FIG. 18, the two groups of connecting rods 321 are connected to the first row and third row of the second mounting slots separately. When the cutting mechanism 2 is required to be low, as shown in FIG. 19, the two groups of connecting rods 321 are connected to the second row and fourth row of the second mounting slots separately. Understandably, in different embodiments, the number of rows of the second mounting slots may be correspondingly changed.

The relevant technical details mentioned in the first embodiment are still valid in this embodiment, and will not be repeated here in order to reduce repetition. Correspondingly, the relevant technical details mentioned in this embodiment may also be applied in the first embodiment.

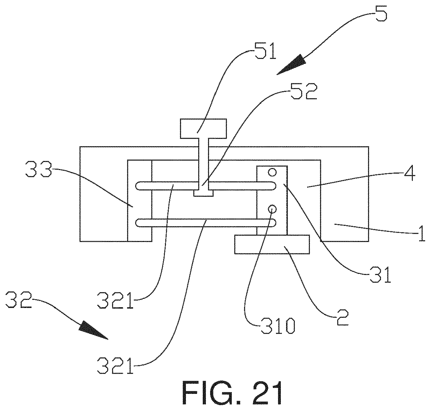

A third embodiment of the disclosure relates to an autonomous operation device. The third embodiment is roughly the same as the second embodiment. In the third embodiment of the disclosure, as shown in FIGs. 20 and 21, the first seat 31 has a first mounting portion 310, and the distance between the connecting assembly 32 and the traveling surface during mounting is configured through the first mounting portion 310.

Further, the first seat 31 has a plurality of first mounting portions 310 arranged along the height direction of the body 1, and one end of the connecting assembly 32 fits with some of the first mounting portions 310.

Further, the first mounting portion 310 is a first mounting slot, and the connecting assembly 32 is hinged with the first mounting slot through a first connecting shaft 61.

Specifically, the connecting assembly 32 has two groups of connecting rods 321 arranged up and down, and the first seat 31 has four rows of the first mounting slots arranged up and down. When the cutting mechanism 2 is required to be high, as shown in FIG. 20, the two groups of connecting rods 321 are connected to the first row and third row of the first mounting slots separately. When the cutting mechanism 2 is required to be low, as shown in FIG. 21, the two groups of connecting rods 321 are connected to the second row and fourth row of the first mounting slots separately. Understandably, in different embodiments, the number of rows of the first mounting slots may be correspondingly changed.

Further, the first seat 31 has a first seat body, and the first mounting portion 310 is detachably connected to the first seat body. The first seat body has a plurality of first mounting areas arranged along the height direction of the body, and the first mounting portion is mounted to any of the first mounting areas in an operable manner. Specifically, the first mounting areas may be slots with different heights. The first mounting portion 310 may be a block structure embedded into the slot. When the height of the second connecting shaft 62 is required to be adjusted, the first mounting portion 310 is embedded into the first mounting area of the corresponding height. In addition, the first mounting area may alternatively be provided with a hook to hook the first mounting portion 310 and position the first mounting portion 310.

The relevant technical details mentioned in the first embodiment are still valid in this embodiment, and the technical effects that can be achieved in the first embodiment can also be achieved in this embodiment. In order to reduce repetition, details are not repeated here. Correspondingly, the relevant technical details mentioned in this embodiment may also be applied in the first embodiment.

In addition, the relevant technical details mentioned in the second embodiment and this embodiment may also be used in conjunction, and will not be repeated here.

Understandably, in other embodiments, the connecting assembly 32 may be directly connected to the body 1, that is, there is no second seat 33.

Due to the correspondence between the first embodiment and this embodiment, this embodiment may be implemented in conjunction with the first embodiment. The relevant technical details mentioned in the first embodiment are still valid in this embodiment, and the technical effects that can be achieved in the first embodiment can also be achieved in this embodiment. In order to reduce repetition, details are not repeated here. Correspondingly, the relevant technical details mentioned in this embodiment may also be applied in the first embodiment.

The above has described in detail the preferred embodiments of the present invention, but it should be understood that various aspects of the embodiments can be modified to adopt other embodiments by incorporating aspects, features, and concepts of various patents, applications, and publications if necessary.

Considering the detailed description above, these and other variations can be made to the embodiments. Generally speaking, the terms used in the claims should not be construed as limited to the specific embodiments disclosed in the specification and claims, but should be understood to include all possible embodiments along with the full scope of equivalents enjoyed by these claims.

Ordinary technicians in this field can understand that the above-mentioned embodiments are specific examples of implementing the present invention, and in practical applications, various changes can be made in form and detail without departing from the spirit and scope of the present invention.

## Claims

1. An autonomous operation device, comprising:
a body;
a cutting mechanism having a cutting body, wherein the cutting body is located at a bottom of the body; and
a gear mounting mechanism connected to the body and the cutting mechanism to configure a height between the cutting body and a traveling surface of the autonomous operation device when the cutting mechanism is mounted to the body.

2. The autonomous operation device of claim 1, wherein the gear mounting mechanism comprises:
a first seat connected to the cutting mechanism; and
a connecting assembly extending along a length direction of the body, wherein two ends of the connecting assembly are associated with the first seat and the body separately, and
a distance between at least one end of the connecting assembly and the traveling surface may be configured when the cutting mechanism is mounted.

3. The autonomous operation device of claim 2, wherein the body has an accommodating cavity with an opening facing downwards, a plurality of limit portions are disposed on an inner wall of the accommodating cavity, and the plurality of limit portions are arranged along a height direction of the body; and
the gear mounting mechanism further comprises:
a second seat disposed opposite the first seat and connected to the connecting assembly, wherein the second seat is provided with docking portions fitting with some of the limit portions.

4. The autonomous operation device of claim 3, wherein the limit portion is a shoulder, and the docking portion is a hook fitting with the shoulder.

5. The autonomous operation device of claim 3, wherein a top of the second seat abuts against a top of the accommodating cavity.

6. The autonomous operation device of claim 3, wherein the second seat of different models is configured to fit with different limit portions.

7. The autonomous operation device of claim 2, wherein the gear mounting mechanism further comprises:
a second seat disposed opposite the first seat and connected to the connecting assembly and the body, wherein the second seat has second mounting portions, the other end of the connecting assembly fits with some of the second mounting portions, and a distance between the connecting assembly and the traveling surface during mounting is configured through the second mounting portions.

8. The autonomous operation device of claim 7, wherein there is a plurality of second mounting portions arranged along the height direction of the body.

9. The autonomous operation device of claim 8, wherein the second mounting portion is a second mounting slot, and the connecting assembly is hinged with the second mounting slot through a second connecting shaft.

10. The autonomous operation device of claim 7, wherein the second seat further has a second seat body, and the second mounting portion is detachably connected to the second seat body; the second seat body has a plurality of second mounting areas arranged along the height direction of the body, and the second mounting portion is mounted to any of the second mounting areas in an operable manner.

11. The autonomous operation device of claim 2, wherein the first seat has a first mounting portion, and the distance between the connecting assembly and the traveling surface during mounting is configured through the first mounting portion.

12. The autonomous operation device of claim 11, wherein there is a plurality of first mounting portions arranged along the height direction of the body.

13. The autonomous operation device of claim 12, wherein the first mounting portion is a first mounting slot, and the connecting assembly is hinged with the first mounting slot through a first connecting shaft.

14. The autonomous operation device of claim 11, wherein the first seat further has a first seat body, and the first mounting portion is detachably connected to the first seat body; the first seat body has a plurality of first mounting areas arranged along the height direction of the body, and the first mounting portion is mounted to any of the first mounting areas in an operable manner.

15. The autonomous operation device of claim 3 or 7, wherein the connecting assembly comprises a plurality of groups of connecting rods arranged along the height direction of the body, and the connecting rods are hinged with the first seat and the second seat.

16. The autonomous operation device of claim 2, wherein the gear mounting mechanism further comprises a work adjustment mechanism connected to the connecting assembly, and the work adjustment mechanism is used for adjusting a work height between the connecting assembly and the traveling surface during the use of the autonomous operation device, wherein
when the cutting mechanism is mounted, the distance between at least one end of the connecting assembly and the traveling surface is configured as a work height threshold.

17. The autonomous operation device of claim 16, wherein the connecting assembly has an annular adjustment portion, and a bearing surface extending along a circumferential direction and varying in height is configured on a circumferential surface of the annular adjustment portion; and
the work adjustment mechanism comprises:
an operation portion at least partially exposed outside the body; and
an adjustment rod connected to the operation portion and fitting with the bearing surface.

18. The autonomous operation device of claim 17, wherein the adjustment rod is detachably connected to the operation portion.

19. The autonomous operation device of claim 18, wherein when the cutting mechanism is mounted to the body, and the length of the adjustment rod is different at different heights between the cutting body and the traveling surface.

20. An autonomous operation device, comprising:
a body;
a cutting mechanism having a cutting body, wherein the cutting body is located at a bottom of the body, and the cutting mechanism has multiple mounting states when mounted to the body; and
a gear mounting mechanism connected to the body and cutting mechanism, wherein the gear mounting mechanism is used for changing the mounting state of the cutting mechanism, and in the different mounting states, there are different work height thresholds between the cutting mechanism and a traveling surface of the autonomous operation device when the autonomous operation device is used.
